# EUROPEAN PATENT SPECIFICATION

(11) **EP 1 388 239 B1**
(45) Date of publication and mention of the grant of the patent: **18.11.2009**
(21) Application number: 02745276.2
(22) Date of filing: 03.05.2002
(51) Int. Cl.: H04L 12/64, H04Q 11/04

(54) **METHOD AND DEVICES FOR THE INTERWORKING OF NODES**
VERFAHREN UND EINRICHTUNG FÜR DIE ZUSAMMENARBEIT VON KNOTEN
PROCEDES ET DISPOSITIF D'INTERFONCTIONNEMENT DE NOEUDS

(30) Priority: 18.05.2001 EP 01112232
(43) Date of publication of application: 11.02.2004
(73) Proprietor: TELEFONAKTIEBOLAGET LM ERICSSON (publ), 164 83 Stockholm (SE)
(72) Inventor: STÜMPERT, Martin, 67691 Hochspeyer (DE); MATTILA, Leena, FIN-20780 Kaarina (FI); SUIHKO, Timo, FIN-02340 Espoo (FI)
(74) Representative: Mohsler, Gabriele
(86) International application number: PCT/EP2002/004840
(87) International publication number: WO 2002/096047

(56) References cited:
- WO-A-00/70885
- GB-A- 2 355 362
- HUITEMA AND AL C: "AN ARCHITECTURE FOR RESIDENTIAL INTERNET TELEPHONY SERVICES" IEEE INTERNET COMPUTING, IEEE SERVICE CENTER, PISCATAWAY, NJ, US, 1 May 1999 (1999-05-01), pages 73-77, XP002144528 ISSN: 1089-7801

## Description

### Technical field of the invention

The present invention relates to a method according to the preamble of claim 1. Devices and software programs embodying the invention are also described.

### Background

When a connection between two users of a communication system is established, bearers have to be set up between different nodes handling the payload, e.g. a data stream or data packets of a speech call or a data connection. The set-up is initiated by a message to a first node which can for example be the control node of a radio access network or a gateway between two different core networks of the communication system. An identification of a second node to which the bearer shall be established is provided to the first node. Generally, the identification includes a designation of a specific access point of the second node.

To allow an independent handling of the call control and of the payload for the user, the nodes handling the payload are controlled by servers which perform the call control as described in 3GPP (3^{rd} Generation Partnership Project) specification 23.205, V 4.0.0, (2001-03), Technical Specification Group Core Network. In order to modify the connection, control messages are sent from the servers to the nodes handling the payload. These messages are for example sent according to the protocol H.248.

It is possible that the first node and the second node are adapted to different bearer protocols, e.g. because the network of an operator is updated with nodes of a new type or if networks using different bearer protocols are interconnected. For example, many existing core networks are based on Asynchronous Transfer Mode (ATM) transmission while the Internet Protocol (IP) is a further frequently used bearer protocol which can be used for example for bearers in core or access networks. A media gateway (MGW) can perform the necessary bearer conversion in this case. Because a media gateway is controlled by a call control server, it is necessary that a server selects and controls each MGW performing the bearer conversion (e.g. from ATM to IP or vice versa). With the control signaling, the server obtains the bearer dependent address of the MGW. The address is then forwarded to a first node for the set-up a bearer connection to the MGW. In the same way, addresses for the set-up of bearers between different media gateways can be obtained and forwarded by a server.

The control of the media gateway by a server allows furthermore to adapt the connection, for example to introduce or remove a transcoder after a handover of the connection between different radio access networks or to introduce tone signals into the connection. However such adaptations are not necessary at the MGW performing the conversion as further manipulations of the payload are not required in this node. The control signaling between the media gateway and the server requires resources in the server and the media gateway and is therefore preferably minimized.

If further media gateways or servers are introduced into a network, it is necessary to notify the servers of the amended configuration of payload handling nodes like MGWs. Consequently, an increasing number of payload handling nodes which can be controlled by a server makes the network configuration more complex and time consuming.

International application WO 00/70855 already discloses a communication system in which a node allows to establish bearers according to different protocols in a connection. However, no mechanism to select and control this node in a simple way is described.

Patent application GB 2 335 362 describes a communication system in which a gateway interconnects different bearer networks and allows to control connections across the respective networks. A translation function in the gateway translates signaling messages between both networks. However neither a conversion between different bearer protocols nor a mechanism to control and select such a conversion is disclosed.

### Summary and description of the invention

It is an object of the present invention to obviate the above disadvantages and reduce the signaling within the communication system. It is a further object, to simplify changes in the communication system.

According to the invention, the method described in claim 1 is performed. Furthermore, the invention is embodied in a communication system, nodes and program units as described in claims 9-13. Advantageous embodiments are described in the further claims.

The proposed method concerns the set-up of a bearer in a communication system from a first node which is adapted to a first bearer protocol to a second node which is adapted to a second bearer protocol. The set-up of a bearer is initiated by at least one message to the first node and an identification of the second node is provided to the first node, generally within the message. The message is for example sent by a control server in the network. The first and the second node can for example be located in a core network or an access network of the communication system.

In the method, the first node determines whether the second node is adapted to the first bearer protocol, either because the first and the second protocol are compatible or identical or because the second node can process both the first and the second protocol. If the first node is adapted to more than one bearer protocol, it can perform the check for different protocols. The identification of the bearer protocol can for example be performed by an analysis of the identification of the second node if different numbering schemes are used for the node addresses in the protocols. In this way, it is for example possible to distinguish IP and ATM nodes. If both nodes are adapted to the same or compatible bearer protocols, the first node sets up the bearer to the second node according to the first protocol. A bearer set-up generally includes an initialization message from the node setting up the bearer and an acknowledgement message from the target node, the messages being sent according to the bearer control protocol.

If both nodes are not adapted to a common protocol, the first node sets up the bearer to a conversion node according to the first protocol. An identification of the second node is sent from the first node to the conversion node, preferably contained in an existing message of the bearer control protocol to minimize the amount of signaling messages. The conversion node sets up a bearer to the second node according to the second protocol and introduces a conversion unit between the first bearer protocol and the second bearer protocol. If more than two bearer protocols are used in the communication system, the conversion node can select the conversion unit according to the provided identification.

The conversion can for example comprise the mapping of information between header fields according to the different protocols and segmentation or concatenation of payload units to adapt message sizes. A conversion is both performed for the payload and the bearer control protocol. For this purpose, the conversion node is provided with a processing system with circuitry to perform the necessary transformations, memories for intermediate storing of payload data and/or header information and transmission and reception units to exchange the messages according to the protocols.

The conversion node communicates only with nodes handling the payload within the connectivity layer. Especially, the conversion node is not controlled by a call control server or another entity in the communication system initiating the set-up of the bearer. Therefore, an advantage of the proposed method is less vertical signaling since control messages from a server and a corresponding complex interface both in the server and the conversion node are not required. Instead, the conversion node performs the bearer conversion independently of any entity handling the connection control. The increase of horizontal signaling between the payload handling nodes is small compared to the reduction in vertical signaling, especially if the identification of the second node is included as an additional parameter into another message from the first node. Because control messages are sent only between the conversion node and the first and second nodes, the configuration of the communication system is simplified.

The proposed method is especially advantageous in a communication system with separate entities for call control and payload handling. In a preferred embodiment of the invention, the first and/or second nodes are therefore controlled by at least one server which provides the identification of the second node to the first node. It is possible that different nodes are controlled by different servers or that different units within a single node are controlled by different servers.

To minimize the implementation requirements in the first node, a server can select the conversion node and provide the identification of the conversion node to the first node. In this case, the first node needs only to determine that the second node is not adapted to the first protocol and an identification of the second node needs to be forwarded to the conversion node. This embodiment allows flexibility for future changes of the network because only information in the servers needs to be updated but requires that the servers have the information of the conversion nodes.

It is also possible that a generic identification of the second node is provided to the first node or to the conversion node. The bearer target which is the address of the conversion node for the bearer between the first node and the conversion node and which is the address of the second node for the conversion node, is determined the from the generic identification. This embodiment avoids adaptations of the servers.

The first node can also store the identification of at least one conversion node and determine the conversion node according to the identification of the second node. The bearer can be set up for example to the same default conversion node for all bearers which require a different protocol. Either a protocol specific address or a generic address can be used. These embodiments are advantageous if the conversion node is located in proximity to a single or few access nodes or gateway nodes. In this way, it is comparatively simple to connect an existing core network to a new radio access network using a different protocol.

It is possible that the first node stores a mapping table between the identification and an address of a node to which the bearer is set up, i.e. that the first node evaluates the identification using the table. If the second node is adapted to the same bearer protocol as the first node, the first node can read the corresponding address of the second node from the table. If the bearer protocols are incompatible, the table comprises the address of an appropriate conversion node for the identification, i.e. the second node. It is also possible that the conversion node comprises a mapping table, e.g. if generic identifications are used.

The first node is for example a control node of an access network or a gateway node. Nodes which interconnect different networks within the communication system are an advantageous place where a bearer conversion is performed, e.g. if an existing communication system is amended by the new access network or a new core network to introduce additional services.

The bearer protocols can for example be the Internet Protocol or an Asynchronous Transfer Mode protocol which are widely used in communication systems.

A conversion node comprises a processing system adapted to perform the conversion of information between a first bearer according to a first bearer protocol and a second bearer according to a second bearer protocol. The conversion node is provided with transmission and reception units, i.e. interfaces, for the corresponding bearers. The conversion node according to the invention receives a request from a first node to set up a bearer to an indicated second node. The conversion node sets up the bearer to the second node according to the second bearer protocol and introduces a unit adapted to convert messages and data between the first bearer protocol and the second bearer protocol. The conversion unit is preferably a software unit executed in the processing system of the conversion node. The second bearer protocol can for example be the same protocol for all bearers, i.e. the conversion node can be adapted to perform the conversion always between a specific pair of bearer protocols with corresponding bearer control protocols. Alternatively, the conversion node can determine the second bearer protocol from the identification of the second node. The identification of the second node by the first node allows a set-up of a bearer without direct control of the conversion node by a control server.

A communication node, e.g. an RNC, has an interface with transmission and reception units adapted to exchange information according to a first bearer protocol and to initiate the set-up of a bearer according to a message including an identification of a second node. This message is generally received over a further interface of the communication node. It can be sent by a control server and it is possible that several messages are required to initiate the set-up of a bearer. The communication node, which is the first node according to the above method, is provided with a processing system adapted to determine whether the second node is adapted to the first bearer protocol. The communication node sets up the connection to a conversion node and sends an identification of the second node to the conversion node in the case that the second node is not adapted to the first bearer protocol. Else a connection is set up to the second node according to the first bearer protocol.

The invention can also be embodied as a program unit on a data carrier or loadable into a node as described above, e.g. as a sequence of signals. The program unit comprises code for performing the steps of the above method relating to the respective node when executed in the processing system of a communication node or a conversion node. Those steps can be executed directly by the program unit or by function calls to other program units, hardware components or an operating system.

Especially, a first program unit is adapted for execution in a conversion node between a first bearer according to a first bearer protocol to a second bearer according to a second bearer protocol. The first program unit comprises code for performing the steps of receiving a request from a first node to set up a bearer to an indicated second node and initiating the set-up of the bearer to the second node according to the second bearer protocol and introducing a unit adapted to convert messages and data between the first bearer protocol and the second bearer protocol.

A second program unit is adapted for execution in a communication node adapted to a first bearer protocol, wherein the communication node initiates the set-up of a bearer according to a message including an identification of a second node. The second program unit comprises code for performing the steps of determining whether the second node is adapted to the first bearer protocol and setting up the bearer to the second node according to the first bearer protocol if the second node is adapted to the first bearer protocol and else initiating the set-up of a bearer according to the first protocol to a conversion node and the sending of an identification of the second node to the conversion node.

The communication node, the conversion node and the program units can perform any steps of the above method relating to the respective node or program unit.

The foregoing and other objects, features and advantages of the present invention will become more apparent in the following detailed description of preferred embodiments as illustrated in the accompanying drawings.

### Brief description of the drawings

- Fig. 1: shows a communication system in which a media gateway performs bearer conversion.
- Fig. 2: shows a communication system with a conversion node according to the invention.

### Detailed description of the drawings

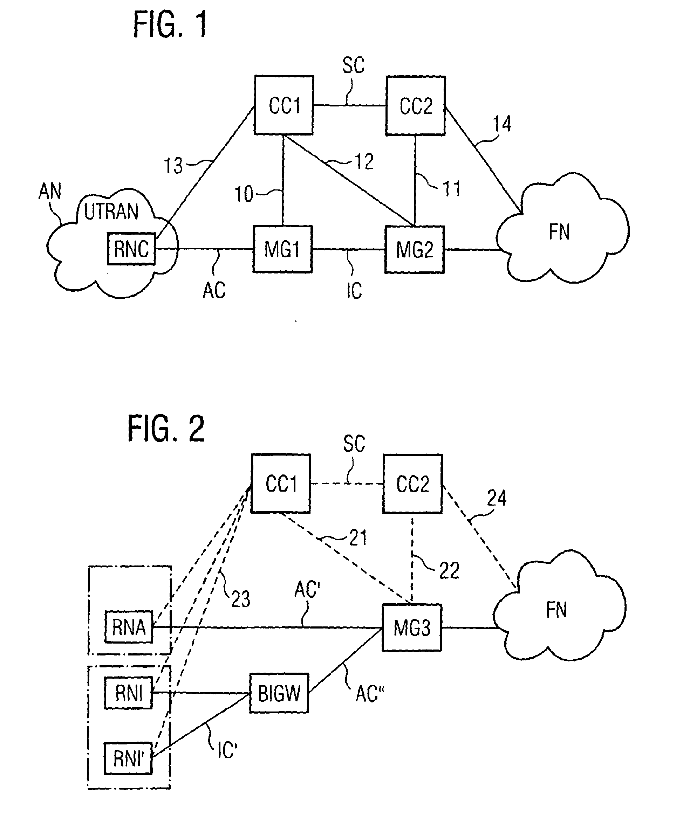

With reference to figure 1, basic steps in the set-up of a connection from a user of a mobile communication network to a further user in a further communication network FN can be described. The further network FN can be for example a PSTN/ISDN (Public Switched Telecommunications Network/Integrated Services Digital Network), a Public Land Mobile Network (PLMN) or the Internet. An initial connection request from the mobile user is received by the RNC (Radio Network Controller) in the access network AN via a radio base station and forwarded to a control server CC1. In the example, the access network is a UTRAN (UMTS Terrestrial Radio Access Network).

After processing of the connection request which generally includes a communication with at least one further control server CC2, the control server CC1 sends a message, for example using the RANAP (Radio Access Network Application Part) protocol to the RNC via connection 13. In the message, the RNC is ordered to set up a bearer to media gateway MG1. Because the RNC in this example is an ATM RNC while the media gateway MG2 which handles connections to the further network FN is IP based, a media gateway MG1 is selected which is adapted to perform the interworking between the ATM connection AC which is controlled by the Q-AAL2 protocol (Q-ATM Adaptation Layer Type 2) and the IP connection IC with a corresponding IP bearer control protocol. According to 3GPP specifications, the connection AC between the RNC and media gateway MG1 is an lu interface while the connection IC between both media gateways is an Nb interface. Therefore, both protocol termination and bearer conversion is performed in the same node, i.e. media gateway MG1.

Signaling between different call control servers CC1, CC2 can be performed via connection SC, for example by the BICC (Bearer Independent Call Control) protocol. Vertical signaling between the control servers CC1, CC2 on connections 10-12 can be performed by the H.248 protocol while an advantageous protocol on connection 14 to the further network is ISUP (Integrated Services User Part).

After the establishment, manipulations of the connection to the further network FN are only required in media gateway MG2 where the transcoders for the speech coding and interworking functions towards the further network FN are preferably located. For this reason, an optional, connection 12 is included from control server CC1 to media gateway MG2 while in the most general case it is also possible to insert the transcoder in media gateway MG1 and omit signaling connection 12. However, the location of a transcoder at the network boundary is more optimal in most cases and allows significant improvements of the connection quality as it is often possible to reduce the total number of transcoders in a connection in this way.

For the set-up of the connection, control server CC1 requests a bearer address from media gateway MG2 via connection 12. Alternatively, the address can be obtained via connection 11, server CC2 and connection SC. The address is then forwarded via connection 10 to the media gateway MG1. Both alternatives require a significant vertical signaling while a further modification of the connection in media gateway MG1 is not required.

In figure 2, different access networks are shown which are represented by IP based radio network controllers RNI, RNI' or an ATM based radio network controller RNA while the corresponding radio base stations are not shown. A conversion node (BIGW) performs bearer conversion because several bearers are used within the communication system. Signaling between the radio network controllers, servers CC1, CC2 and further network FN can be performed via connections 21-24, SC.

The core network with media gateway MG3 is ATM based in this example while within the radio access networks, two types of RNCs exist. The ATM based RNC denoted by RNA is connected directly to the ATM based MGW MG3 whereas the IP based RNCs RNI, RNI' are connected to the media gateway MG3 via conversion node BIGW. The conversion node performs the bearer conversion but no further modification of the connection. Therefore, a control by a server CC1, CC2 is not required. Correspondingly, both the connections IC' and AC" constitute the same interface, i.e. an lu interface in this example with an lu interface on IP bearer for connection IC' and an lu interface on an ATM bearer on connection AC". Communication protocol and bearer can therefore be terminated in different entities in this example.

Concerning the provision of the necessary information for the set-up of the connections to the RNCs, there are different options.

In a first alternative, the call control servers CC1, CC2 are oblivious of the bearer capabilities of the network nodes which handle the connection, i.e. the RNCs in this example. When a server CC1, CC2 receives the bearer address from the MGW MG3, it provides it to the RNC which is handling the connection. If the RNC is connected to the same type of connectivity network as the selected MGW, the RNC directly establishes the bearer towards the selected MGW. In this example, the radio network controller RNA directly sets up a connection to media gateway MG3 using the ATM protocol over connection AC'.

If the RNC is within another type of connectivity network compared to the selected MGW, i.e. the radio network controllers RNI, RNI' in the example, it establishes the bearer towards a default conversion node BIGW by using a default bearer address. The bearer is set up e.g. over connection IC' using the Internet Protocol. The conversion node BIGW then establishes the bearer towards the selected MGW MG3 by using the bearer address provided by the RNC over connection AC". The bearer control protocol between the RNC and conversion node includes the address of the selected MGW, preferably as a container parameter in an existing message.

A major advantage of this alternative is that it is backward compatible solution. Neither the call control servers nor the MGWs require an adaptation when an existing communication system with a single bearer protocol is amended by nodes using a second protocol. The server and MGWs within the system do not need to know the bearer capability of the amended or existing network nodes. If new types of bearers are introduced within one network and the nodes of said network determine whether a conversion node is required, no impact on the nodes in the other network exists, i.e. the reconfiguration is simplified.

In a second alternative, the call control servers know the bearer capabilities of payload handling network nodes. The information is for example stored during network configuration. When a server receives a bearer address from a MGW, it provides the address to the RNC from which the bearer is established. If the RNC is connected to the same type of connectivity network as the selected MGW, RNC directly establishes the bearer towards the selected MGW using the bearer address provided by the server CC1. If the RNC is within another type of connectivity network compared to the selected MGW, i.e. if it is adapted to another communication protocol, the server CC1 provides both the MGW address and the address of a conversion node. With this information, the RNC establishes the bearer towards the conversion node. If a default conversion node is used the RANAP message on connection 23 does not need to carry conversion node address. It is possible that the RANAP message carries only an indication that a conversion is necessary or the RNC establishes a bearer to the conversion node always if it can not establish a direct connection to the MGW, e.g. because it is not adapted to decode the address. The address of the selected MGW MG3 is sent as a container parameter both in the RANAP message on connection 23 and in the bearer control protocol between the radio network controller RNI, RNI' and the conversion node BIGW on connection IC', IC", respectively.

In a third alternative a generic bearer independent address is used in both call control including call control protocols towards radio access networks, like RANAP, and bearer control protocols. By means of this bearer independent address it is possible for both MGWs and conversion nodes to perform mapping to bearer dependent addresses which are then finally used to establish the bearer. For this purpose a corresponding mapping table is stored in the nodes which need to perform a conversion of the generic address to the bearer dependent address, i.e. generally in all nodes handling the payload. This alternative is flexible and does not require adaptations in the servers but requires changes in a high number of mapping tables if the network is reconfigured.

The above embodiments admirably achieve the objects of the invention. However, it will be appreciated that departures can be made by those skilled in the art without departing from the scope of the invention which is limited only by the claims. Especially, the nodes and servers as described above are logical entities and different nodes or servers may be collocated or part of a single device.

## Claims

1. Method for the set-up of a bearer in a communication system from a first node which is adapted to a first bearer protocol to a second node which is adapted to a second bearer protocol, wherein the set-up of a bearer is initiated by a message to the first node and an identification of the second node is provided to the first node, and wherein a conversion node (BIGW) sets up a bearer according to the second bearer protocol to the second node, **characterized in that**
the first node determines whether the second node is adapted to the first bearer protocol and sets up the bearer according to the first bearer protocol if the second node is adapted to the first bearer protocol, and
else the first node sets up a bearer according to the first bearer protocol to the conversion node (BIGW) and sends the identification of the second node to the conversion node (BIGW), which introduces a unit adapted to perform a conversion between the first bearer protocol and the second bearer protocol.

2. Method according to claim 1, wherein the first and/or second node is controlled by at least one server (CC1) which provides the identification of the second node to the first node.

3. Method according to claim 2, wherein the at least one server (CC1) selects the conversion node (BIGW) and provides the identification of the conversion node (BIGW) to the first node.

4. Method according to claim 1 or 2, wherein a generic identification of the second node is provided to the first node or to the conversion node (BIGW) and wherein a bearer target is determined from the generic identification.

5. Method according to claim 1 or 2, wherein the first node stores the identification of at least one conversion node (BIGW) and determines the conversion node (BIGW) according to the identification of the second node.

6. Method according to any preceding claim, wherein the first node or the conversion node (BIGW) stores a mapping table between the identification and an address of a node.

7. Method according to any preceding claim, wherein the first node (RNA, RNI) interconnects different networks within the communication system.

8. Method according to any preceding claim, wherein at least one bearer protocol is an internet Protocol or an Asynchronous Transfer Mode protocol.

9. Communication system, **characterized in that** it is adapted to perform all the steps of a method according to any preceding claim.

10. Conversion node with an interface for the establishment of bearers with further nodes and a processing system adapted to perform a conversion between a first bearer according to a first bearer protocol and a second bearer according to a second bearer protocol, wherein the conversion node (BIGW) is adapted to receive a request from a first node to establish a bearer according to the first bearer protocol with the first node and to set up the bearer to a second node according to the second bearer protocol, **characterized in that**
the conversion node (BIGW) is adapted to receive from the first node an identification of the second node over the interface for the establishment of bearers and the conversion node (BIGW) is adapted to introduce a unit adapted to perform the conversion between the first bearer protocol and the second bearer protocol.

11. Communication node adapted to a first bearer protocol, wherein the communication node initiates the set-up of a bearer according to a message including an identification of a second node, **characterized in that**
the communication node is adapted to determine whether the second node is adapted to the first bearer protocol and the communication node is adapted to set up the bearer according to the first bearer protocol if the second node is adapted to the first bearer protocol,
and the communication node is adapted to set up else a bearer according to the first bearer protocol to a conversion node (BIGW) and to send an identification of the second node to the conversion node (BIGW).

12. Program unit on a data carrier or loadable into a conversion node between a first bearer according to a first bearer protocol and a second bearer according to a second bearer protocol, **characterized in that** said program unit comprises code for performing the steps of
receiving a request from a first node to set up a bearer to an indicated second node and initiating the set-up of the bearer to the second node according to the second bearer protocol and introducing a unit adapted to perform a conversion between the first bearer protocol and the second bearer protocol.

13. Program unit on a data carrier or loadable into a communication node adapted to a first bearer protocol, wherein the communication node initiates the set-up of a bearer according to a message including an identification of a second node, **characterized in that** said program unit comprises code for performing the steps of
determining whether the second node is adapted to the first bearer protocol and setting up the bearer to the second node according to the first bearer protocol if the second node is adapted to the first bearer protocol
and else initiating the set-up of a bearer according to the first protocol to a conversion node and sending the identification of the second node from the communication node to the conversion node (BIGW).

14. Node or program unit according to any of the claims 10-13, wherein the node or program unit is adapted for the use in a method according to any of the claims 1 - 8.

## Patentansprüche

1. Verfahren zum Aufbau eines Trägers in einem Kommunikationssystem von einem ersten Knoten, welcher für ein erstes Trägerprotokoll ausgelegt ist, zu einem zweiten Knotens, welcher für ein zweites Trägerprotokoll ausgelegt ist, wobei der Aufbau eines Trägers durch eine Nachricht an den ersten Knoten eingeleitet wird, und eine Kennung des zweiten Knotens an den ersten Knoten geliefert wird, und wobei ein Umwandlungsknoten (BIGW) einen Träger gemäß dem zweiten Trägerprotokoll zum zweiten Knoten aufbaut, **dadurch gekennzeichnet, dass**
der erste Knoten bestimmt, ob der zweite Kosten für das erste Trägerprotokoll ausgelegt ist, und den Träger gemäß dem ersten Trägerprotokoll aufbaut, wenn der zweite Träger für das erste Trägerprotokoll ausgelegt ist, und
der erste Knoten andernfalls einen Träger gemäß dem ersten Trägerprotokoll zum Umwandlungsknoten (BIGW) aufbaut und die Kennung des zweiten Knotens an den Umwandlungsknoten (BIGW) sendet, welcher eine Einheit einführt, die zur Durchführung einer Umwandlung zwischen dem ersten Trägerprotokoll und dem zweiten Trägerprotokoll ausgelegt ist.

2. Verfahren nach Anspruch 1, wobei der erste und/oder zweite Knoten durch wenigstens einen Server (CC1) gesteuert wird, welcher die Kennung des zweiten Knotens an den ersten Knoten liefert.

3. Verfahren nach Anspruch 2, wobei der wenigstens eine Server (CC1) den Umwandlungsknoten (BIGW) auswählt und die Kennung des Umwandlungsknotens (BIGW) an den ersten Knoten liefert.

4. Verfahren nach Anspruch 1 oder 2, wobei eine generische Kennung des zweiten Knotens an den ersten Knoten oder den Umwandlungsknoten (BIGW) geliefert wird, und wobei ein Trägerziel aus der generischen Kennung bestimmt wird.

5. Verfahren nach Anspruch 1 oder 2, wobei der erste Knoten die Kennung wenigstens eines Umwandlungsknotens (BIGW) speichert und den Umwandlungsknoten (BIGW) gemäß der Kennung des zweiten Knotens bestimmt.

6. Verfahren nach einem der vorhergehenden Ansprüche, wobei der erste Knoten oder der Umwandlungsknoten (BIGW) eine Zuordnungstabelle zwischen der Kennung und einer Adresse eines Knotens speichert.

7. Verfahren nach einem der vorhergehenden Ansprüche, wobei der erste Knoten (RNA, RNI) verschiedene Netze innerhalb des Kommunikationssystems miteinander verbindet.

8. Verfahren nach einem der vorhergehenden Ansprüche, wobei wenigstens ein Trägerprotokoll ein Internetprotokoll oder ein Protokoll des asynchronen Übertragungsmodus ist.

9. Kommunikationssystem, **dadurch gekennzeichnet, dass** es zur Durchführung aller Schritte eines Verfahrens nach einem der vorhergehenden Ansprüche ausgelegt ist.

10. Umwandlungsknoten mit einer Schnittstelle zur Herstellung von Trägern mit weiteren Knoten und einem Verarbeitungssystem, das zur Durchführung einer Umwandlung zwischen einem Träger gemäß einem ersten Trägerprotokoll und einem Träger gemäß einem zweiten Trägerprotokoll ausgelegt ist, wobei der Umwandlungsknoten (BIGW) so ausgelegt ist, dass er eine Anforderung von einem ersten Knoten zum Herstellen eines Trägers gemäß dem ersten Trägerprotokoll mit dem ersten Knoten und Aufbauen des Trägers zu einem zweiten Knoten gemäß dem zweiten Trägerprotokoll empfängt, **dadurch gekennzeichnet, dass**
der Umwandlungsknoten (BIGW) so ausgelegt ist, dass er vom ersten Knoten eine Kennung des zweiten Knotens über die Schnittstelle zur Herstellung von Trägern empfängt, und der Umwandlungsknoten (BIGW) so ausgelegt ist, dass er eine Einheit einführt, die zur Durchführung der Umwandlung zwischen dem ersten Trägerprotokoll und dem zweiten Trägerprotokoll ausgelegt ist.

11. Kommunikationsknoten, der für ein erstes Trägerprotokoll ausgelegt ist, wobei der Kommunikationsknoten den Aufbau eines Trägers gemäß einer Nachricht einleitet, die eine Kennung eines zweiten Knotens umfasst, **dadurch gekennzeichnet, dass**
der Kommunikationsknoten so ausgelegt ist, dass er bestimmt, ob der zweite Knoten für das erste Trägerprotokoll ausgelegt ist, und der Kommunikationsknoten so ausgelegt ist, dass er den Träger gemäß dem ersten Trägerprotokoll aufbaut, wenn der zweite Knoten für das erste Trägerprotokoll ausgelegt ist,
und der Kommunikationsknoten so ausgelegt ist, dass er andernfalls einen Träger gemäß dem ersten Trägerprotokoll zu einem Umwandlungsknoten (BIGW) aufbaut und eine Kennung des zweiten Knotens an den Umwandlungsknoten (BIGW) sendet.

12. Programmeinheit auf einem Datenträger oder in einen Umwandlungsknoten zwischen einem ersten Träger gemäß einem ersten Trägerprotokoll und einem zweiten Träger gemäß einem zweiten Trägerprotokoll ladbar, **dadurch gekennzeichnet, dass** die Programmeinheit Code zum Durchführen der folgenden Schritte umfasst:
Empfangen einer Anforderung von einem ersten Knoten zum Aufbau eines Trägers zu einem angegeben zweiten Knoten, Einleiten des Aufbaus des Trägers zum zweiten Knoten gemäß dem zweiten Trägerprotokoll und Einführen einer Einheit, die zur Durchführung einer Umwandlung zwischen dem ersten Trägerprotokoll und dem zweiten Trägerprotokoll ausgelegt ist.

13. Programmeinheit auf einem Datenträger oder in einen Kommunikationsknoten ladbar, der für ein erstes Trägerprotokoll ausgelegt ist, wobei der Kommunikationknoten den Aufbau eines Trägers gemäß einer Nachricht einleitet, die eine Kennung eines zweiten Knotens umfasst, **dadurch gekennzeichnet, dass** die Programmeinheit Code zum Durchführen der folgenden Schritte umfasst:
Bestimmen, ob der zweite Knoten für das erste Trägerprotokoll ausgelegt ist und Aufbauen des Trägers zum zweiten Knoten gemäß dem ersten Trägerprotokoll, wenn der zweite Knoten für das erste Trägerprotokoll ausgelegt ist,
und andernfalls Einleiten des Aufbaus eines Trägers gemäß dem ersten Protokoll zu einem Umwandlungsknoten und Senden der Kennung des zweiten Knotens vom Kommunikationsknoten an den Umwandlungsknoten (BIGW).

14. Knoten oder Programmeinheit nach einem der Ansprüche 10 bis 13, wobei der Knoten oder die Programmeinheit zur Verwendung in einem Verfahren nach einem der Ansprüche 1 bis 8 ausgelegt ist.

## Revendications

1. Procédé pour l'établissement d'un support dans un système de communication à partir d'un premier noeud qui est adapté à un premier protocole de support vers un second noeud qui est adapté à un second protocole de support, dans lequel l'établissement d'un support est amorcé par un message vers le premier noeud et une identification du second noeud est fournie au premier noeud, et dans lequel un noeud de conversion (BIGW) établit un support en fonction du second protocole de support vers le second noeud, **caractérisé en ce que**
le premier noeud détermine si le second noeud est adapté au premier protocole de support et établit le support en fonction du premier protocole de support si le second noeud est adapté au premier protocole de support, et
sinon le premier noeud établit un support en fonction du premier protocole de support vers le noeud de conversion (BIGW) et envoie l'identification du second noeud au noeud de conversion (BIGW) qui introduit une unité adaptée afin d'effectuer une conversion entre le premier protocole de support et le second protocole de support.

2. Procédé selon la revendication 1, dans lequel le premier et/ou second noeud est commandé par au moins un serveur (CC1) qui fournit l'identification du second noeud au premier noeud.

3. Procédé selon la revendication 2, dans lequel le au moins un serveur (CC1) sélectionne le noeud de conversion (BIGW) et fournit l'identification du noeud de conversion (BIGW) au premier noeud.

4. Procédé selon la revendication 1 ou 2, dans lequel une identification générique du second noeud est fournie au premier noeud ou au noeud de conversion (BIGW) et dans lequel une cible de support est déterminée à partir de l'identification générique.

5. Procédé selon la revendication 1 ou 2, dans lequel le premier noeud mémorise l'identification d'au moins un noeud de conversion (BIGW) et détermine le noeud de conversion (BIGW) en fonction de l'identification du second noeud.

6. Procédé selon une quelconque des revendications précédentes, dans lequel le premier noeud ou le noeud de conversion (BIGW) mémorise une table de mise en correspondance entre l'identification et une adresse d'un noeud.

7. Procédé selon une quelconque des revendications précédentes, dans lequel le premier noeud (RNA, RNI) interconnecte différents réseaux à l'intérieur du système de communication.

8. Procédé selon une quelconque des revendications précédentes, dans lequel au moins un protocole de support est un protocole Internet ou un protocole de mode de transfert asynchrone.

9. Système de communication, **caractérisé en ce que** il est adapté afin d'exécuter toutes les étapes d'un procédé selon une quelconque des revendications précédentes.

10. Noeud de conversion avec une interface pour l'établissement de supports avec d'autres noeuds et un système de traitement adapté afin d'effectuer une conversion entre un premier support en fonction d'un premier protocole de support et un second support en fonction d'un second protocole de support, dans lequel le noeud de conversion (BIGW) est adapté afin de recevoir une demande provenant d'un premier noeud afin d'établir un support en fonction du premier protocole de support avec le premier noeud et d'établir le support vers un second noeud en fonction du second protocole de support, **caractérisé en ce que**
le noeud de conversion (BIGW) est adapté afin de recevoir en provenance du premier noeud une identification du second noeud via l'interface à des fins d'établissement de supports et le noeud de conversion (BIGW) est adapté afin d'introduire une unité adaptée afin d'effectuer la conversion entre le premier protocole de support et le second protocole de support.

11. Noeud de communication adapté à un premier protocole de support, dans lequel le noeud de communication amorce l'établissement d'un support en fonction d'un message incluant une identification d'un second noeud, **caractérisé en ce que**
le noeud de communication est adapté afin de déterminer si le second noeud est adapté au premier protocole de support et le noeud de communication est adapté afin d'établir le support en fonction du premier protocole de support si le second noeud est adapté au premier protocole de support,
et le noeud de communication est adapté afin d'établir sinon un support en fonction du premier protocole de support vers un noeud de conversion (BIGW) et d'envoyer une identification du second noeud au noeud de conversion (BIGW).

12. Unité de programme sur un support de données ou chargeable dans un noeud de conversion entre un premier support en fonction d'un premier protocole de support et un second support en fonction d'un second protocole de support, **caractérisé en ce que** ladite unité de programme comprend du code pour exécuter les étapes consistant à
recevoir une demande provenant d'un premier noeud afin d'établir un support vers un second noeud indiqué et amorcer l'établissement du support vers le second noeud en fonction du second protocole de support et introduire une unité adaptée afin d'effectuer une conversion entre le premier protocole de support et le second protocole de support.

13. Unité de programme sur un support de données ou chargeable dans un noeud de communication adapté à un premier protocole de support, dans lequel le noeud de communication amorce l'établissement d'un support selon un message incluant une identification d'un second noeud, **caractérisé en ce que** ladite unité de programme comprend du code pour exécuter les étapes consistant à
déterminer si le second noeud est adapté au premier protocole de support et établir le support vers le second noeud en fonction du premier protocole de support si le second noeud est adapté au premier protocole de support,
et sinon amorcer l'établissement d'un support en fonction du premier protocole vers un noeud de conversion et envoyer l'identification du second noeud à partir du noeud de communication vers le noeud de conversion (BIGW).

14. Noeud ou unité de programme selon une quelconque des revendications 10 à 13, dans lequel le noeud ou l'unité de programme est adapté en vue de l'utilisation dans un procédé selon une quelconque des revendications 1 à 8.
